# EUROPEAN PATENT APPLICATION

(11) **EP 0 867 109 A1**
(43) Date of publication of application: **30.09.1998**
(21) Application number: 97500057.1
(22) Date of filing: 25.03.1997
(51) Int. Cl.: A01G 5/06, B65D 85/50

(54) **Procedure for preserving fruit and container used in said procedure**

(71) Applicant: ATB-6, S.L., 04710 Santa Maria de Aguila, Almeria (ES)
(72) Inventor: Camacho Ferre, Francisco, c/o, 04710 Santa Maria de Aguila (Almeria) (ES)
(74) Representative: Perez Bonal, Bernardo

(57) **Abstract**

Procedure for preserving fruit on a branch and container used in said procedure, characterized by a cut (1) in the bunch or peduncle (2) and its encapsulation in a container (4) which holds nutrient and preserving means (6) which lengthen the life of the bunch, peduncle (2), fruit or fruits (5) incorporated, the container (4) also serving a publicity support means.

## Description

### OBJECT OF THE INVENTION

The proposed invention refers to a procedure for preserving fruit in bunches or units, and to the container used in said procedure.

The system has been devised mainly for preserving "tomatoes in bunches", as well as grapes and similar fruits, although it is likewise applicable to any perishable vegetable product, both in unit form and in bunches.

It is characterized by the cut in the peduncle of the fruit or fruit bunch and its subsequent insertion in a container with nutrient and/or preserving substances which lengthen the life of the fruit bunch and the fruit, while enabling promotional publicity of the grower's or shopkeeper's brand.

### BACKGROUND OF THE INVENTION

In order to extend the life of a fruit, the peduncle is sometimes immersed in sealing wax, thereby sealing the cut. This is the case with certain types of pears.

The applicant is not aware of the existence of any means for extending the preservation period of fruits such as tomatoes and grapes, in bunches, by encapsulating the cut end in a container with a solution of nutrients and/or preserving agents.

This system makes the fruit fresher and provides it a more desirable appearance at the fruit shop, since the very principle consists in arranging the branches and fruits as though unpicked from the plant, when in fact it has already been harvested; it also enables a proper transport condition and enhances its presentation at the selling point.

The system allows the consumer access to a fruit in a cultivation environment up to the very moment of consumption.

### DESCRIPTION OF THE INVENTION

Fruit in bunches begins to deteriorate two or three days after being cut from the plant and their original colour rapidly acquires ocher or brownish shades, the fruit loses the skin's texture and sheen, the ripening is accelerated and the consistency is progressively lost, resulting in loss of flavor quality and a lower selling price.

The invention which is the object of the present specification refers to a procedure for preserving fresh fruit harvested in bunches or in unit form - applicable to tomatoes, grapes, etc. - and to the means used in said procedure.

It is characteristic in that the fruit or bunch is initially cut from the plant by conventional means, the cut forming any angle in respect to the axis of the bunch or peduncle.

It is then encapsulated by inserting it through the cover of a container made of a suitably strong material which can be easily perforated by the bunch tip or the fruit peduncle using a slight pressure, although sufficiently resilient to enclose the contents of the nutrient solution and to adhere to the contour of the bunch or peduncle in the area where it penetrates said container.

The container is provided with nutrient and/or preservation means which lengthen the life of the bunch or peduncle and thus of the fruit or fruits involved.

Said innocuous, conventional products may either be diluted in a liquid or else incorporated to a gel which prevents the liquid to drain externally through the periphery of the peduncle or bunch in contact with the edge of the capsule's perforation.

The body of the container serves to publicize the product and its quality, as well as the brand of the grower, packer, distributor, etc.

### DESCRIPTION OF THE DRAWINGS

In order to complement the description set forth and to enable the characteristics of the invention to be better and more easily understood, a set of drawings is attached to this specification, being an integral part thereof, in which the following is represented within an illustrative and non-limiting character:

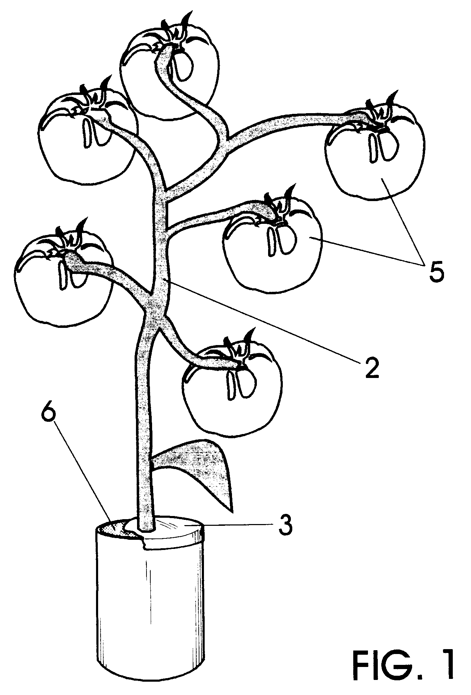

Figure 1 shows a tomato bunch with fruits and the nutrient and preservation agents container which is the object of the invention.

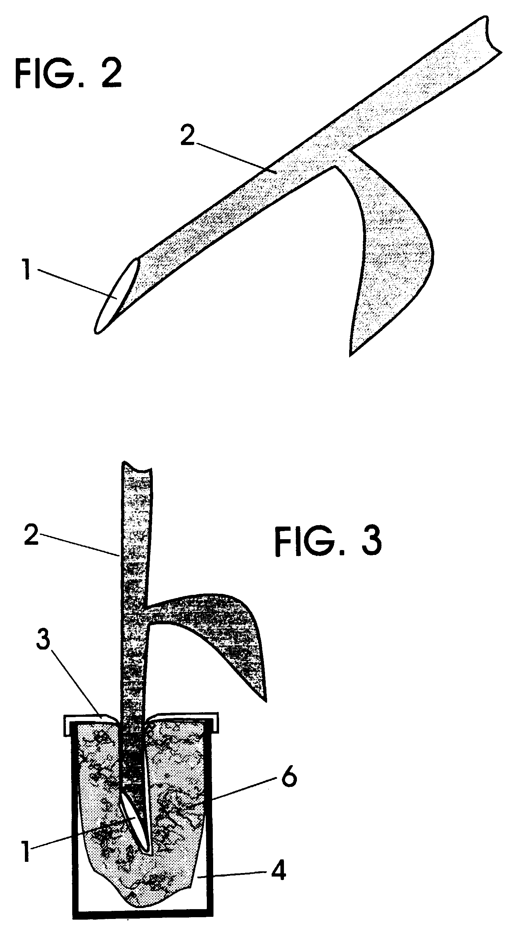

Figure 2 shows a detail of the tip of the bunch, with a cut through the branch.
Figure 3 shows a detail of said tip, already inserted in the container and surrounded by the nutrient and preservation gel of the preferred example.

### PREFERRED EMBODIMENT OF THE INVENTION

In the light of the above disclosure, the present invention refers to a procedure for preserving fruits and to the means used in said procedure, characterized by a cut (1) in the bunch or peduncle (2) at any angle in respect to their axis and the use of conventional means for subsequent encapsulation in (4) the container, which is made of a material having an adequate strength and resiliency so that it can be perforated by the tip (1) of the bunch or peduncle (2) and adhere to their contour once perforated, the container (4) being provided with nutrient and/or preserving means designed to lengthen the life of the bunch (2) and of the fruit or fruits (5) involved, said means being properly diluted in water or incorporated to a gel (6).

The exterior face of the container is used as a publicity support.

This description need not be more extensive in the understanding that an expert on the subject will have enough information to grasp the scope of the invention and the advantages deriving therefrom, and to enable reproduction.

It should be understood that, provided the essence of the invention is not altered, the materials may vary and the shape, size and arrangement of the parts is liable to modification.

The terms used in the description and the sense of the description must always be taken in a non-limiting manner.

## Claims

1. Procedure for preserving fruit on a branch, essentially characterized by a cut (1) in the bunch or peduncle (2), using conventional means, and subsequently encapsulating the bunch or peduncle by perforating the surface (3) and penetrating inside (4) the container, which holds nutrient and preserving means for lengthening the life of the bunch or peduncle (2) and the fruit or fruits (5) involved, said means being diluted in water or incorporated to a gel (6).

2. Container for preserving fruit on a branch, according to the previous claim, characterized in that the container is made of a material with an adequate strength and resiliency enabling it to be perforated by the tip (1) of the bunch or peduncle (2) and to adhere to their contour once perforated.

3. Container for preserving fruit on a branch, according to the previous claim, characterized in that it uses the external face thereof as a publicity support means.
